# EUROPÄISCHE PATENTSCHRIFT

(11) **EP 0 936 420 B1**
(45) Veröffentlichungstag und Bekanntmachung des Hinweises auf die Patenterteilung: **09.02.2005**
(21) Anmeldenummer: 98123047.7
(22) Anmeldetag: 08.12.1998
(51) Int. Cl.: F24H 3/06

(54) **Heizgerät, insbesondere für Wohnwagen, Caravans, etc. mit Elektrozusatzheizung**
Heater, esp. for camper, caravan etc. with supplementary electric heater
Appareil de chauffage, en particulier pour camping-car, caravanne etc. avec chauffage électrique supplémentaire

(30) Priorität: 13.02.1998 DE 19805978
(43) Veröffentlichungstag der Anmeldung: 18.08.1999
(73) Patentinhaber: Truma Gerätetechnik GmbH & Co., 85640 Putzbrunn (DE)
(72) Erfinder: Pirner, Albert, 81829 München (DE)
(74) Vertreter: Leske, Thomas, Dr.

(56) Entgegenhaltungen:
- EP-A- 0 262 546
- US-A- 4 337 823

## Beschreibung

Die Erfindung betrifft ein Heizgerät, insbesondere für Wohnwagen, Caravans, etc.

Die insbesondere für Wohnwagen, Caravans, etc. eingesetzten Heizgeräte sind so ausgelegt, daß sie auch unter Energiespar-Gesichtspunkten für alle auftretenden Heizlastfälle energieökonomisch betreibbar sind. Derartige Heizgeräte weisen einen Wärmeübertrager, ein Gebläse und eine Elektrozusatzheizung auf, wobei der Wärmeübertrager und die Elektrozusatzheizung in einem Gehäuse angeordnet sind. Vor allem wenn ein hoher Heizbedarf vorhanden ist, wird der in das Heizgerät installierte Brenner gezündet und die bei der Verbrennung von beispielsweise Heizgas anfallende Energie mittels des Wärmeübertragers an den zu beheizenden Raum von dem Heizgerät abgegeben. Um zu gewährleisten, daß die Oberflächentemperatur des Heizgerätes nicht zu hoch ist, so daß die Gefahr von Verbrennungen beim Berühren auftreten kann, und um zu gewährleisten, daß die bei der Verbrennung zu Heizzwecken freigesetzte Wärmeenergie möglichst gleichmäßig in den zu beheizenden Raum verteilt wird, weist das Heizgerät zusätzlich ein Gebläse auf.

In Fällen, in welchen nur ein moderater Heizbedarf vorhanden ist, ist es nicht erforderlich, den Brenner einzuschalten, sondern für einen solchen Fall ist eine Elektrozusatzheizung vorgesehen. Bei den bekannten Heizgeräten des Anmelders ist diese Elektrozusatzheizung sowohl an der Vorderseite als auch an der Rückseite des Wärmeübertragers des Heizgerätes angeordnet. Diese Elektrozusatzheizung weist eine Heizschlange auf, welche mit Rippen bzw. Lamellen versehen ist, welche an den Rippenabstand des Wärmeübertragers angepaßt sind. Bei einem derartigen bekannten Heizgerät ist daher ein relativ hoher Montageaufwand für die Elektrozusatzheizung, welche aus mehreren Teilen besteht, erforderlich. Darüber hinaus erfordert diese Elektrozusatzheizung einen relativ hohen Fertigungsaufwand mit hohen Anforderungen an die Fertigungsgenauigkeit, da die Rippen bzw. Lamellen der Heizschlange an den Abstand der Rippen des Wärmeübertragers angepaßt werden müssen. Außerdem besteht bei an der Vorderseite angeordneter Elektrozusatzheizung die Gefahr, daß die Oberflächentemperatur der äußeren Verkleidung zumindest bereichsweise Werte annehmen kann, welche eine Gefahr für Verletzungen bei eventuellem Berühren darstellen.

Zur Vermeidung von zu hohen Oberflächentemperaturen der dem zu beheizenden Raum zugewandten Verkleidung des Heizgerätes sind Heizgeräte bekannt geworden, welche die Elektrozusatzheizung im Austritt des Gebläses anordnen. Um die Elektrozusatzheizung in einem solchen Fall ökonomisch betreiben zu können und um zu verhindern, daß insbesondere am Gebläse nicht zu hohe Bauteiltemperaturen auftreten, ist es bei einer solchen Anordnung erforderlich, daß bei Betreiben der Elektrozusatzheizung stets das Gebläse arbeitet. Damit ergeben sich Nachteile hinsichtlich eines energie-ökonomischen Betreibens derartiger Heizgeräte.

Aus der DE-AS 19 34 480 ist des weiteren ein Gasofen insbesondere für Wohnwagen bekannt. Dieser bekannte Gasofen weist einen Brenner mit Mischrohr, einen im oberen Gehäusebereich angeordneten senkrechten Abgasrohrstutzen und einen Verbrennungsluftrohrstutzen auf, wobei das langgestreckte Gehäuse mit dem Wärmeaustauscher um die durch den Abgasrohrstutzen gebildete senkrechte Achse schwenkbar ist. Eine elektrische Zusatzheizung ist nicht vorgesehen.

Des weiteren ist aus der DE 33 27 893 ein Heizkörper, insbesondere für kleine Räume bekannt. Bei diesem Heizkörper ist ein Widerstandsheizrohr vorgesehen, welches zwischen zwei Platten angeordnet ist und eine Zusatzheizung darstellt. Die elektrische Zusatzheizung ist jedoch im Inneren des Heizkörpers angeordnet.

Die Aufgabe der Erfindung besteht daher darin, ein Heizgerät, insbesondere für Wohnwagen, Caravans, etc., zu schaffen, welches leicht und unabhängig vom Rippenabstand seines Wärmeübertragers und unabhängig von der Ausführung des Wärmeübertragers mit Links- oder Rechts-Anschluß montierbar ist und bei welchem seine Elektrozusatzheizung auch ohne Betätigung seines Gebläses energieökonomisch und so betreibbar ist, daß an der dem zu beheizenden Raum zugewandten Verkleidung moderate Oberflächentemperaturen auftreten.

Diese Aufgabe wird durch ein Heizgerät mit den Merkmalen gemäß Anspruch 1 gelöst. Zweckmäßige Weiterbildungen sind in den abhängigen Ansprüchen definiert.

Das Heizgerät gemäß der Erfindung, wie es insbesondere für Wohnwagen, Caravans, etc., jedoch nicht ausschließlich dafür, geeignet ist, weist bezüglich seines prinzipiellen Aufbaus einen Wärmeübertrager, ein Gebläse und eine Elektrozusatzheizung auf. Der Wärmeübertrager und die Elektrozusatzheizung sind in einem Gehäuse angeordnet. Das Gehäuse des Heizgerätes weist eine vordere Verkleidung, welche dem zu heizenden Wohnbereich zugewandt ist, eine hintere Verkleidung, welche einer Wand zugewandt ist, an welche das Heizgerät vorzugsweise installiert wird, und entsprechende Seitenverkleidungen auf. Die Elektrozusatzheizung ist in an sich bekannter Weise mit einer Schaltvorrichrung und einem Regel- und Sicherheitsthermostat versehen. Erfindungsgemäß ist die Elektrozusauheizung zwischen der hinteren Verkleidung und dem Wärmeübertrager angeordnet und weist eine lamellenfreie Heizschlange auf. so daß keine Anpassungsoder Montageprobleme bezüglich des Rippenabstandes des Wärmeübertragers auftreten. Die Heizschlange ist vorzugsweise unterhalb des Kopfbereiches des Wärmeübertragers angeordnet und vorzugsweise so bemessen, daß die Außenkontur des Wärmeübertragers im wesentlichen nicht überstiegen wird. Selbstverständlich ist es möglich, die Heizschlange so auszubilden, daß sie bis nahezu an die Innenoberflächen der seitlichen Verkleidungen des Gehäuses des Heizgerätes reicht. Aus Gründen der Kompaktheit ist jedoch die Größe des Heizgerätes in erster Linie durch die Größe des Wärmeübertragers bestimmt.

Ein wesentlicher Vorteil der Erfindung besteht darin, daß die Heizstäbe der Elektrozusaczheizung keine Lamellen aufweisen, so daß weder bei der Herstellung der Elektrozusatzheizung noch bei deren Montage im Heizgerät hohe Genauigkeitsanforderungen vorhanden sind. Darüber hinaus bietet die Anordnung der Elektrozusatzheizung zwischen der hinteren Verkleidung und dem Wärmeübertrager den Vorteil, daß insbesondere die dem zu beheizenden Wohnbereich zugewandte Verkleidung eine relativ niedrige Oberflächentemperatur aufweist, so daß bei deren Berühren die Gefahr von Verletzungen aufgrund zu hoher Oberflächentemperaturen minimiert ist. Des weiteren bietet die Anordnung der Elektrozusatzheizung innerhalb des Gehäuses des Heizgerätes und unabhängig vom Gebläse den Vorteil, daß das Gebläse durch die Elektrozusatzheizung bei keinen Betriebsbedingungen beeinträchtigt wird und daß die Elektrozusatzheizung auch ohne Betrieb des Gebläses betreibbar ist. Bei im Austritt des Gebläses angeordneter Elektrozusatzheizung von Geräten des Standes der Technik ist dies nicht möglich. Darüber hinaus ist bei dem erfindungsgemäßen Heizgerät ein leichter Einbau der Elektrozusatzheizung dadurch möglich, daß diese aufgrund ihrer Anordnung zwischen der hinteren Verkleidung und dem Wärmeübertrager unabhängig davon, ob der Wärmeübenrager mit Links- oder Rechts-Anschluß ausgeführt ist, montierbar ist.

Gemäß einer weiteren Ausgestaltung ist die Elektrozusatzheizung als komplette und kompakte Einheit ausgebildet und so in das Gehäuse einsetzbar. Dadurch, daß somit nur ein Montageteil bei der Installation der Elektroheizung vorhanden ist, wird der Montageaufwand des erfindungsgemäßen Heizgerätes erheblich verringert. Somit ergibt sich eine Reduzierung des Montageaufwandes durch die kompakte Einheit der Elektrozusatzheizung und dadurch, daß deren Aufbau vom Rippenabstand des Wärmeübertragers entkoppelt ist.

Gemäß einem weiteren Ausführungsbeispiel ist bei dem erfindungsgemäßen Heizgerät der Regel- und Sicherheitsthermostat zwischen der Heizschlange und der Schaltvorrichtung angeordnet. Eine derartige Anordnung trägt weiter zur Erhöhung der Kompaktheit der Elektrozusatzheizung bei und führt außerdem zu einer Kabelersparnis.

Erfindungsgemäß ist gemäß einem weiteren Ausführungsbeispiel die Elektrozusatzheizung so betreibbar, daß es nicht erforderlich ist, daß das Gebläse parallel zum Betreiben der Elektrozusatzheizung ebenfalls betrieben wird. Dadurch ergibt sich eine sehr hohe Flexibilität beim Abdecken von unterschiedlichen Heizlastanforderungen, da die Elektrozusatzheizung gerätemäßig unabhängig von dem Gebläse ist. Durch diese Unabhängigkeit vom Gebläse ist es des weiteren möglich, nahezu beliebige, auch größere Anschlußleistungen zu realisieren.

Gemäß noch einem weiteren Ausführungsbeispiel ist die Heizschlange im wesentlichen symmetrisch ausgebildet und ist die Elektrozusatzheizung unabhängig davon, ob der Wärmeübertrager mit Links- oder mit Rechts-Anschluß ausgebildet ist, ohne zusätzlichen Montageaufwand anbringbar. Vorzugsweise ist die Heizschlange in Form einer sich von der Symmetrieachse nach beiden Seiten erstrekkenden Doppelschleifenanordnung ausgebildet. Dadurch ist es möglich, je nach gewünschter zu installierender elektrischer Leistung der Elektrozusatzheizung, die erforderliche Länge der Heizschlange im Bereich zwischen der hinteren Verkleidung und dem Wärmeübertrager unter Ausnutzung des dort vorhandenen Platzes unterzubringen.

Um zu gewährleisten, daß die durch die Elektrozusatzheizung abgegebene Wärmeenergie nicht zu Überhitzungen der einem Wandbereich zugewandten Verkleidung des Gehäuses des Heizgerätes führt, ist die hintere Verkleidung doppelwandig ausgebildet und weist an ihrer Oberfläche, welche in das Innere des Heizgerätes in Richtung auf den Wärmeübertrager gerichtet ist, eine wärmereflektierende Oberfläche auf. Dadurch wird gewährleistet, daß ein möglichst hoher Anteil der durch die Elektrozusatzheizung abgegebenen Wärmeenergie in Richtung auf den zu beheizenden Wohnbereich geleitet wird.

Vorzugsweise weist die hintere Verkleidung zur Lagefixierung der Elektrozusatzheizung bei deren Montage an der dem Wärmeübertrager zugewandten Seite eine Falzblechauflage auf. Diese Falzblechauflage dient dazu, beim Einsetzen der Elektrozusatzheizung in das Gehäuse zu gewährleisten, daß die Zusatzheizung eine definierte Lage innerhalb des Gehäuses erhält, ohne daß die Heizstäbe die inneren Oberflächen der seitlichen Verkleidungen berühren.

Im Bereich der Schaltvorrichtung ist die Elektrozusatzheizung mit einem Sattel versehen, welcher im Einbauzustand an den Rippen des Wärmeübertragers anliegt und dadurch einen definierten Abstand zwischen der Heizschlange und den Rippen beläßt. Dieser definierte Abstand zwischen den Rippen des Wärmeübertragers und der Heizschlange dient dazu, den Anteil des Wärmeübergangs durch freie Konvektion zu erhöhen, um die durch die Elektrozusatzheizung abgegebene Wärmeenergie aus dem Heizkörper in den Wohnbereich abzuführen.

Vorzugsweise ist die Heizschlange an einer mit der Schaltvorrichtung verbundenen Aufnahmeplatte befestigt, wobei im Einbauzustand die Aufnahmeplatte von der hinteren Verkleidung mittels Ringpuffer/Ringsattel beabstandet gehalten ist. Diese Ringpuffer bzw. Ringsattel sind sowohl an der Aufnahmeplatte als auch an der hinteren Verkleidung vorgesehen, so daß neben der Gewährleistung einer leichten Montierbarkeit auch eine Erhöhung der Steifigkeit der im wesentlichen flächigen Elemente herbeigeführt wird. Vorzugsweise sind an der Aufnahmeplatte Halter befestigt, welche Ausnehmungen aufweisen, in welche die Heizschlange einsetzbar ist. Diese Ausnehmungen sind so angeordnet, daß die Heizschlange nach Einsetzen in diesen Ausnehmungen beabstandet von der Aufnahmeplatte gehalten wird. Um die Heizschlange zuverlässig an der Aufnahmeplatte gegen unbeabsichtigtes Lösen zu befestigen, sind des weiteren Gegenhalter vorgesehen, welche nach erfolgtem Einsetzen der Heizschlange in die Ausnehmungen der Halter angebracht werden. Vorzugsweise werden die Halter und die Gegenhalter geschweißt oder formschlüssig mit der Aufnahmeplatte verbunden. Eine formschlüssige Verbindung kann dabei beispielsweise eine Rast-Steck-Verbindung sein.

Falls es erwünscht ist, die Heizleistung der Elektrozusatzheizung weiter zu erhöhen. ist es auch möglich, die Heizschlange als Zweifach-Doppelschleifenanordnung auszubilden. In einem solchen Fall weisen die Halter bzw. die Gegenhalter entsprechende übereinander angeordnete Ausnehmungen auf. Der prinzipielle Aufbau und die prinzipielle Befestigung der Heizschlange an der Aufnahmeplatte entspricht jedoch dem einer einfachen Doppelschleifenanordnung der Heizschlange. Die Verkleidung des Heizgerätes ist vorzugsweise aus Aluminium ausgebildet.

Weitere Vorteile, Merkmale und Anwendungsmöglichkeiten der Erfindung werden nun anhand eines Ausführungsbeispiels unter Bezugnahme auf die beigefügten Figuren detailliert erläutert.
- Fig. 1: zeigt eine vorderseitige Ansicht des erfindungsgemäßen Heizgerätes bei abgenommener Front-Verkleidung;
- Fig. 2: zeigt einen Schnitt B-B durch das Heizgerät gemäß Fig. 1;
- Fig. 3: zeigt eine Ansicht der eine Einheit bildenden Elektrozusatzheizung gemäß der Erfindung;
- Fig. 4: zeigt einen vergrößerten Ausschnitt des Bereiches der Anordnung der Heizschlange der Elektrozusatzheizung; und
- Fig. 5: zeigt den Bereich der Anordnung der Heizschlange mit Ringpuffer/Ringsattel.

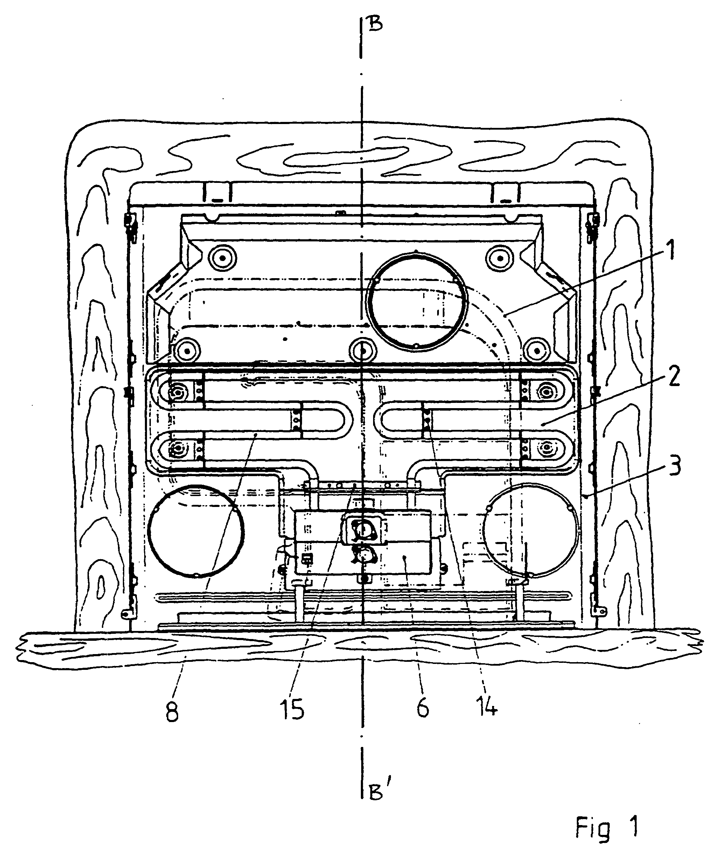

In Fig. 1 ist eine vorderseitige Ansicht des Heizgerätes bei abgenommener Front-Verkleidung gezeigt. Im Gehäuse 3 des Heizgerätes ist ein Wärmeübertrager 1 angeordnet. In Blickrichtung auf den Wärmeübertrager 1 ist vor diesem erfindungsgemäB die installierte Elektrozusatzheizung 2 mit deren Heizschlange 8 und Schalteinrichtung 6 dargestellt. Bei installierter hinterer Verkleidung 5 ist somit die Elektrozusatzheizung 2 zwischen der hinteren Verkleidung 5 und dem Wärmeübertrager 1 angeordnet. Um einen definierten Abstand der Heizschlange 8 zu den Rippen 16 des Wärmeübertragers 1 zu gewährleisten, ist im Bereich der Schalteinrichtung 6 ein Halter 15 vorgesehen, welcher bei montierter Elektrozusatzheizung 2 an der Oberfläche der Rippen 16 des Wärmeübertragers 1 anliegt.

Die Heizschlangen 8 sind in einer Doppelschleifenanordnung so angeordnet, daß sie im wesentlichen den gesamten rückwärtigen Bereich des Wärmeübertragers 1 überdecken und geringfügig über dessen äußere Kontur hinausreichen, jedoch nicht die inneren Oberflächen der seitlichen Verkleidungen des Gehäuses 3 berühren. Mit einer derartigen Anordnung der Heizschlange 8 kann somit je nach Anzahl der gelegten Schleifen des Heizstabes der Heizschlange 8 eine der entsprechenden elektrischen Leistung entsprechende Länge der Heizschlange untergebracht werden.

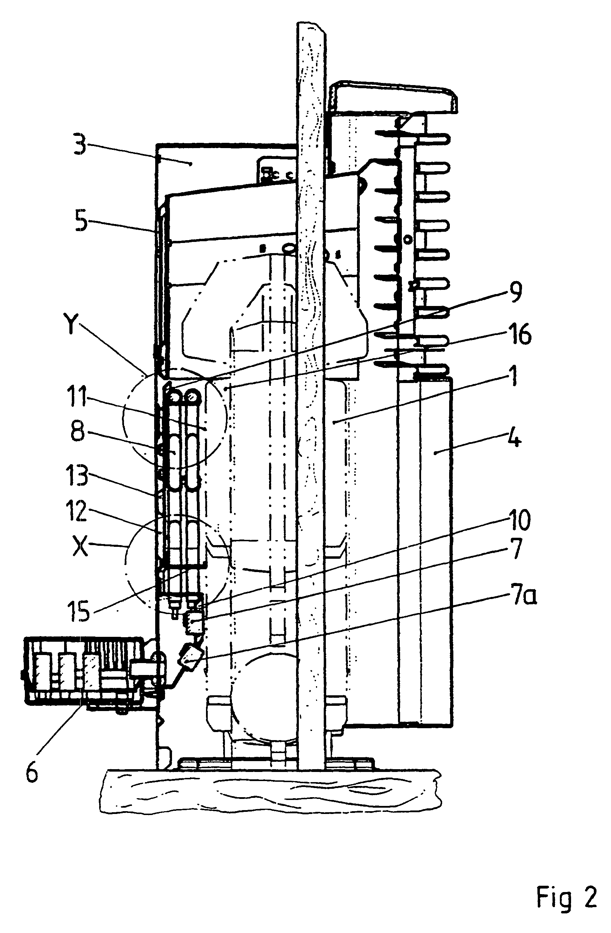

Fig. 2 zeigt einen Schnitt B-B durch den Heizkörper gemäß Fig. 1. In dieser Schnittansicht, in welcher aus Gründen der Übersichtlichkeit der Wärmeübertrager 1 lediglich durch eine Strich-Punkt-Punkt-Linie dargestellt ist, ist gezeigt, daß zwischen der auf die vordere Verkleidung 4 gerichteten Oberfläche des Wärmeübertrager 1 und der vorderen Verkleidung 4 keine Elektrozusatzheizung angebracht ist. Vielmehr ist gemäß der Erfindung die Elektrozusatzheizung zwischen der Oberfläche des Wärmeübertragers 1, welche auf die hintere Verkleidung 5 des Gehäuses 3 des Heizgerätes gerichtet ist, und der hinteren Verkleidung 5 angeordnet. Aus Gründen der Übersichtlichkeit sind sowohl der Brenner als auch die Gaszufuhr nicht näher bezeichnet.

Die Heizschlange 8 der Elektrozusatzheizung 2 ist als Zweifach-Doppelschleifenanordnung ausgebildet, d.h. in dem Abstand zwischen der hinteren Verkleidung 5 und der Oberfläche der Rippen 16 des Wärmeübertragers 1 sind parallel zueinander zwei im wesentlichen in gleicher Form ausgebildete Heizschlangen angeordnet. Durch diese Zweifach-Anordnung ist die mit der Elektrozusatzheizung erzielbare abgegebene Wärmeenergie deutlich erhöht, ohne daß die Gefahr zu hoher Oberflächentemperaturen an der dem Wohnbereich zugewandten vorderen Verkleidung 4 gegeben ist. Die Heizschlange 8 ist auf einer Aufnahmeplatte 12 mittels Halter 14, 15 aufgenommen. Der Halter 15 ist dabei so ausgebildet, daß zwischen der Oberfläche der Heizschlange 8, welche den Rippen 16 des Wärmeübertragers unmittelbar zugewandt ist, und der Oberfläche der Rippen 16 des Wärmeübertragers 1 ein definierter Mindestabstand 11 verbleibt.

Im Bereich des Reuelthermostates 7 ist ein Sattel 10 vorgesehen, welcher eine Berührung mit der Oberfläche der Rippen 16 verhindert. Ein Sicherheitsthermostat 7a ist durch eine weitere Abschrägung der Hintere-Verkleidung 5 der Schaltvorrichtung 6 von der Oberfläche der Rippen 16 entfernt angeordnet.

Die Aufnahmeplatte 12 der Heizschlangeneinheit weist eine Falzblechauflage 9 auf. Darüber hinaus sind die hintere Verkleidung 5 und die Aufnahmeplatte 12 mit Ringpuffern/Ringsatteln 13 versehen, an welchen die Elektrozusatzheizung an der hinteren Verkleidung 5 befestigbar ist. Die Elektrozusatzheizung 2 ist mit ihren Bestandteilen, nämlich der Heizschlange 8, der Aufnahmeplatte 12, den Haltern 14, 15, dem Regel- und Sicherheitsthermostat 7 und der Schaltvorrichtung, als eine komplette Moduleinheit in das Gehäuse 3 des Heizgerätes montierbar.

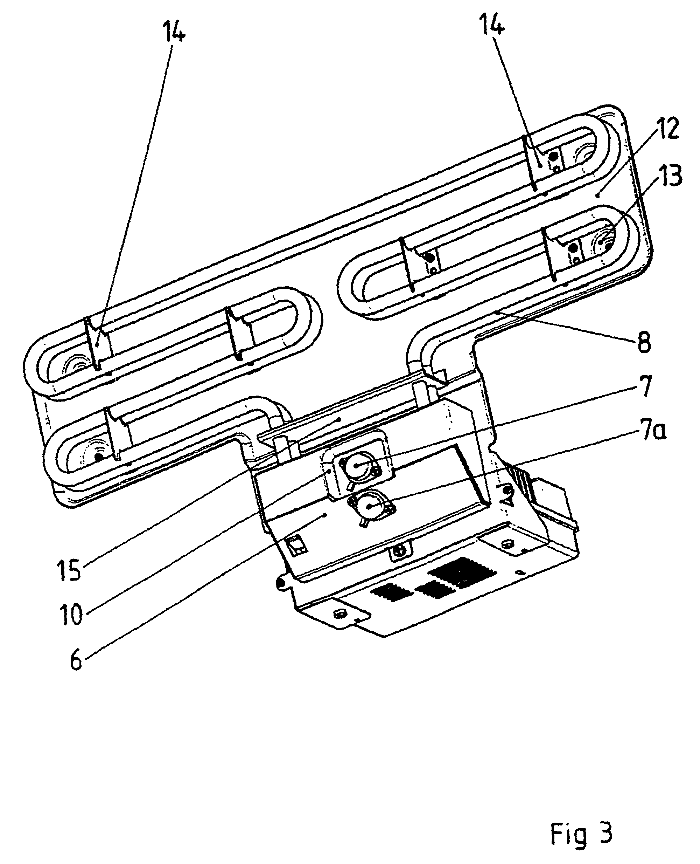

In Fig. 3 ist eine als komplette Einheit ausgebildete Elektrozusatzheizung in perspektivischer Darstellung gezeigt. Die bereits in Verbindung mit Fig. 2 beschriebene Elektrozusatzheizung ist in der dargestellten Form vorgefertigt. Der Halter 15 weist Bohrungen auf, durch welche zur Vormontage die Heizschlange 8 eingesetzt und verstemmt wird. Der Halter 15 ist mit der Aufnahmeplatte 12 verschraubt oder punktgeschweißt. Es ist jedoch auch möglich, den Halter 15 mittels einer formschlüssigen Rast-Steck-Verbindung an der Aufnahmeplatte 12 zu befestigen.

Damit die Heizschlange 8 zuverlässig an den Haltern 14 mit der Aufnahmeplatte 12 verbunden ist, sind die Halter 14 als Fixierbleche ausgebildet. Die Heizschlange 8 ist in an die Oberfläche der Heizstäbe angepaßten Ausnehmungen in den Fixierblechen gehalten. Auch diese Fixierbleche sind mit der Aufnahmeplatte 12 verschraubt, punktgeschweißt oder mit einer Rast-Steck-Verbindung versehen. Platz- und kabelsparend ist zwischen der Heizschlange 8 und der Schaltvorrichtung 6 der Regel- und Sicherheitsthermostat 7 angeordnet, so daß auch durch diese Anordnung die Kompaktheit der kompletten Moduleinheit der Elektrozusatzheizung erhöht wird.

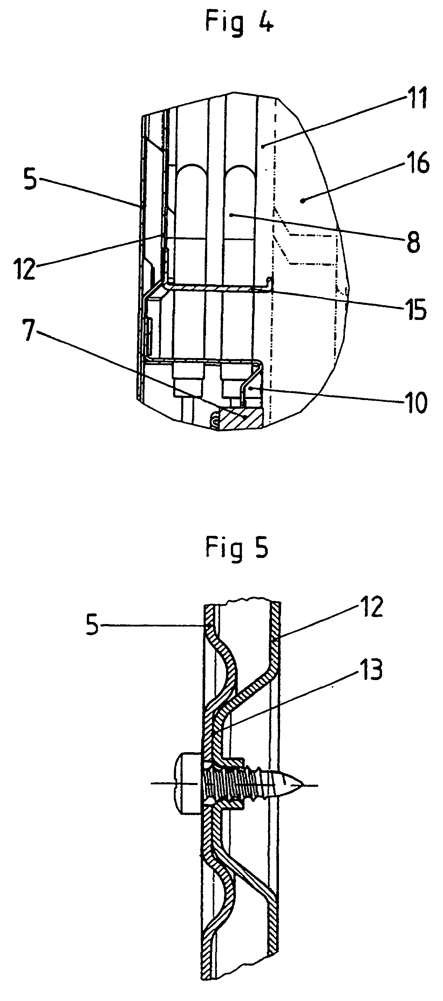

In Fig. 4 ist der Bereich X des Heizgerätes gemäß Fig. 2 vergrößert dargestellt. In der vergrößerten Ausschnittsansicht ist ersichtlich, daß zwischen der Oberfläche der Rippen 16 des Wärmeübertragers 1 und der Oberfläche der Heizelemente 8 ein Abstand bzw. Spalt 11 vorgesehen ist. Des weiteren ist ersichtlich, daß die Aufnahmeplatte 12 mit einer Ringpuffer/Ringsattel-Anordnung 13 an der hinteren Verkleidung 5 abgestützt ist und dort befestigbar ist. In der hinteren Verkleidung 5 ist des weiteren eine Öffnung ausgebildet, durch welche zur Montage der Elektrozusatzheizung 2 in dem Bereich zwischen dem Wärmeübertrager 1 und der hinteren Verkleidung 5 die Heizschlange der Elektrozusatzheizung einführbar bzw. einsteckbar ist. Diese vereinfachte Montage der Elektrozusatzheizung ermöglicht nicht nur eine leichte Zugriffsmöglichkeit im Falle einer gegebenenfalls erforderlichen Reparatur, sondern ermöglicht es des weiteren, die Elektrozusatzheizung als Modulbaureihe auszubilden und je nach Anwendungsfall und gewünschtem Zusatzheizbedarf gegebenenfalls mit geringem Montageaufwand eine Elektrozusatzheizung geringerer Leistung durch eine Elektrozusatzheizung höherer Leistung oder umgekehrt auszuwechseln.

In Fig. 5 ist der Bereich des Heizgerätes gemäß Fig. 2 vergrößert dargestellt.

Diese Ringpuffer/Ringsattel-Anordnung 13 gewährleistet einerseits einen Spalt zwischen der Aufnahmeplatte 12 und der hinteren Verkleidung 5, wodurch die gesamte hintere Rückwandstruktur des Gehäuses 3 doppelwandig ausgebildet ist, und gewährleistet andererseits bezuglich der Befestigung an der hinteren Verkleidung 5 eine exakte Lagefixierung der Aufnahmeplatte mit den daran mittels der Halter 14, 15 befestigten Heizschlangen 8.

## Patentansprüche

1. Heizgerät, insbesondere für Wohnwagen, Caravans, etc., mit einem Wärmeübertrager (1) und einer Elektrozusatzheizung (2), wobei der Wärmeübertrager (1) und die Elektrozusatzheizung (2) in einem Gehäuse (3) angeordnet sind, welches eine vordere (4), einem Wohnbereich zugewandte und eine hintere, einer Wand zugewandte Verkleidung (5) aufweist, und die Elektrozusatzheizung (2) eine Schaltvorrichtung (6) aufweist, wobei die Elektrozusatzheizung (2) eine Heizschlange (8) aufweist, welche zwischen der hinteren Verkleidung (5) und dem Wärmeübertrager (1) angeordnet ist, wobei die Heizschlange (8) lamellenfrei ausgebildet ist.

2. Heizgerät nach Anspruch 1, **dadurch gekennzeichnet, dass** ein Abstandhalter (10,15) zwischen dem Wärmeübertrager (1) und der Heizschlange (8) vorgesehen ist.

3. Heizgerät nach Anspruch 1 oder 2, **dadurch gekennzeichnet, daß** die Heizschlange (8) lamellenfrei ist.

4. Heizgerät nach Anspruch 2, **dadurch gekennzeichnet, daß** das der Abstandhalter (10,15) aus Aluminium besteht.

5. Heizgerät nach einem der Ansprüche 1 bis 4, **dadurch gekennzeichnet, daß** ein Regelthermostat (7) und/oder ein Sicherheitsthermostat (7a) vorgesehen ist/sind, wobei der Regel- (7) und/oder der Sicherheitsthermostat (7a) zwischen der Heizschlange (8) und der Schaltvorrichtung angeordnet ist/sind.

6. Heizgerät nach einem der Ansprüche 1 bis 5, **dadurch gekennzeichnet, daß** die Elektrozusatzheizung (2) als komplette Einheit ausgebildet ist und so in das Gehäuse (3) einsetzbar ist.

7. Heizgerät nach einem der Ansprüche 1 bis 5, **dadurch gekennzeichnet, daß** ein Gebläse vorgesehen ist, wobei die Elektrozusatzheizung (2) auch ohne laufendes Gebläse betreibbar ist.

8. Heizgerät nach einem der Ansprüche 1 bis 7, **dadurch gekennzeichnet, daß** die Heizschlange (8) im wesentlichen symmetrisch ausgebildet ist und die Elektrozusatzheizung (2)'unabhängig davon, ob der Wärmeübertrager (1) mit Links- oder mit Rechtsanschluß ausgebildet ist, ohne zusätzlichen Montageaufwand montierbar ist.

9. Heizgerät nach einem der Ansprüche 1 bis 8, **dadurch gekennzeichnet, daß** die hintere Verkleidung (5) doppelwandig mit auf den Wärmeübertrager (1) gerichteter wärmereflektierender Oberfläche ausgebildet ist.

10. Heizgerät nach einem der Ansprüche 1 bis 9, **dadurch gekennzeichnet, daß** die Heizschlange (8) in Form einer sich von der Symmetrieachse nach beiden Seiten erstreckenden Doppelschleifenanordnung ausgebildet ist.

11. Heizgerät nach einem der Ansprüche 1 bis 10, **dadurch gekennzeichnet, daß** die Elektrozusatzheizung (2) im Bereich ihrer Schaltvorrichtung (6) einen Abstandshalter (10) aufweist, welcher im Einbauzustand einen definierten Mindestabstand (11) zwischen der Heizschlange (8) und Rippen (16) des Wärmeübertragers (1) beläßt.

12. Heizgerät nach einem der Ansprüche 1 bis 11, **dadurch gekennzeichnet, daß** die Heizschlange (8) an einer mit der Schaltvorrichtung (6) verbundenen Aufnahmeplatte (12) befestigt ist, wobei im Einbauzustand die Aufnahmeplatte (12) von der hinteren Verkleidung (5) mittels Ringpuffer/Ringsattel (13) beabstandet gehalten ist.

13. Heizgerät nach Anspruch 12, **dadurch gekennzeichnet, daß** an der Aufnahmeplatte (12) Halter (14) befestigt sind, welche die Heizschlange (8) beabstandet von der Aufnahmeplatte (12) halten und ein unbeabsichtigtes Lösen der Heizschlange (8) verhindern.

14. Heizgerät nach Anspruch 13, **dadurch gekennzeichnet, daß** die Halter (14) mit der Aufnahmeplatte (12) geschweißt oder formschlüssig verbindbar sind.

15. Heizgerät nach einem der Ansprüche 1 bis 14, **dadurch gekennzeichnet, daß** die Heizschlange (8) als Zweifach-Doppelschleifenanordnung ausgebildet ist.

16. Heizgerät nach einem der Ansprüche 1 bis 15, **dadurch gekennzeichnet, daß** zumindest die hintere Verkleidung (5) aus Aluminium besteht.

17. Heizgerät nach einem der Ansprüche 1 bis 16, **dadurch gekennzeichnet, daß** die Abmessungen der Heizschlange (8) die Außenkonturen des Wärmeübertragers (1) im wesentlichen nicht übersteigen.

## Claims

1. Heater, especially for campers, caravans etc, having a heat exchanger (1) and a supplementary electric heater (2), the heat exchanger (1) and the supplementary electric heater (2) being positioned inside a casing (3) which has a front cover (4) facing a living area and a rear cover (5) facing a wall, and the supplementary electric heater (2) having a switching device (6), whereby the supplementary electric heater (2) has a heating coil (8) which is positioned between the rear cover (5) and the heat exchanger (1), the heating coil (8) being made without fins.

2. Heater as in Claim 1,
**characterised in that**
there is a spacer (10, 15) between the heat exchanger (1) and the heating coil (8).

3. Heater as in Claim 1 or 2, **characterised in that** the heating coil (8) has no fins.

4. Heater as in Claim 2,
**characterised in that**
the spacer (10, 15) is made of aluminium.

5. Heater as in one of Claims 1 to 4,
**characterised in that**
there is/are a control thermostat (7) and/or a safety thermostat (7a), the control thermostat (7) and/or safety thermostat (7a) being positioned between the heating coil (8) and the switching device.

6. Heater as in one of Claims 1 to 5,
**characterised in that**
the supplementary electric heater (2) is in the form of a complete unit and can be placed thus into the casing (3).

7. Heater as in one of Claims 1 to 5,
**characterised in that**
there is a fan, it being also possible to operate the supplementary electric heater (2) when the fan is not running.

8. Heater as in one of Claims 1 to 7,
**characterised in that**
the heating coil (8) is essentially symmetrical in shape, and the supplementary electric heater (2) can be installed without any additional assembly costs irrespective of whether the heat exchanger (1) is made with a left-hand or right-hand connector.

9. Heater as in one of Claims 1 to 9,
**characterised in that**
the rear cover (5) is double-walled with a heat-reflecting surface facing towards the heat exchanger (1 ).

10. Heater as in one of Claims 1 to 9,
**characterised in that**
the heating coil (8) is in the form of a double loop arrangement extending out at both sides from the axis of symmetry.

11. Heater as in one of Claims 1 to 10,
**characterised in that**
the supplementary electric heater (2) has a spacer (10) in the area of its switching device (6) which, when in the assembled state, leaves a defined minimum distance between the heating coil (8) and the ribs (16) of the heat exchanger.

12. Heater as in one of Claims 1 to 11,
**characterised in that**
the heating coil (8) is attached to a holder plate (12) which is connected to the switching device (6), the holder plate (12) being, when in the assembled state, kept at a distance from the rear cover (5) by means of ring buffers / ring brackets (13).

13. Heater as in Claim 12,
**characterised in that**
there are supports (14) attached to the holder plate (12) which keep the heating coil (8) at a distance from the holder plate (12) and prevent the accidental releasing of the heating coil (8).

14. Heater as in Claim 13,
**characterised in that**
the supports (14) are welded to the holder plate (12) or can be joined by positive engagement.

15. Heater as in one of Claims 1 to 14,
**characterised in that**
the heating coil (8) is in the form of a two-fold double loop arrangement.

16. Heater as in one of Claims 1 to 15,
**characterised in that**
the rear cover (5), at least, is made of aluminium.

17. Heater as in one of Claims 1 to 16,
**characterised in that**
the dimensions of the heating coil (8) essentially do not exceed the outer contours of the heat exchanger (1).

## Revendications

1. Appareil de chauffage, en particulier pour camping-cars, caravanes, etc., avec un échangeur thermique (1) et un chauffage électrique additionnel (2), l'échangeur thermique (1) et le chauffage électrique additionnel (2) étant montés dans un carter (3) qui possède un habillage avant (4) tourné vers la zone d'habitation et un habillage arrière (5) tourné vers une cloison et le chauffage électrique additionnel (2) possédant un dispositif de commutation (6), dans lequel le chauffage électrique additionnel (2) possède un serpentin de chauffage (8) qui est disposé entre l'habillage arrière (5) et l'échangeur thermique (1), le serpentin de chauffage (8) étant construit sans lamelles.

2. Appareil de chauffage selon la revendication 1, **caractérisé en ce qu'**il est prévu une entretoise (10, 15) entre l'échangeur thermique (1) et le serpentin de chauffage (8).

3. Appareil de chauffage selon la revendication 1 ou 2, **caractérisé en ce que** le serpentin de chauffage (8) ne possède pas de lamelles.

4. Appareil de chauffage selon la revendication 2, **caractérisé en ce que** l'entretoise (10, 15) est en aluminium.

5. Appareil de chauffage selon l'une des revendications 1 à 4, **caractérisé en ce qu'**un thermostat de régulation (7) et/ou un thermostat de sécurité (7a) sont prévus, le thermostat de régulation (7) et/ou le thermostat de sécurité (7a) étant montés entre le serpentin de chauffage (8) et le dispositif de commutation.

6. Appareil de chauffage selon l'une des revendications 1 à 5, **caractérisé en ce que** le chauffage électrique additionnel (2) prend la forme d'une unité complète et peut être monté ainsi dans le carter (3).

7. Appareil de chauffage selon l'une des revendications 1 à 5, **caractérisé en ce qu'**il est prévu une soufflante, le chauffage électrique additionnel (2) pouvant également fonctionner sans que la soufflante ne tourne.

8. Appareil de chauffage selon l'une des revendications 1 à 7, **caractérisé en ce que** le serpentin de chauffage (8) est de construction sensiblement symétrique et **en ce que** le chauffage électrique additionnel (2) peut être monté sans travail de montage supplémentaire, que l'échangeur thermique (1) soit conçu pour raccordement à gauche ou à droite.

9. Appareil de chauffage selon l'une des revendications 1 à 8, **caractérisé en ce que** l'habillage arrière (5) est à double cloison, avec une surface réfléchissant la chaleur tournée vers l'échangeur thermique (1).

10. Appareil de chauffage selon l'une des revendications 1 à 9, **caractérisé en ce que** le serpentin de chauffage (8) prend la forme d'une double boucle s'étendant de part et d'autre de l'axe de symétrie.

11. Appareil de chauffage selon l'une des revendications 1 à 10, **caractérisé en ce que** le chauffage électrique additionnel (2) possède au niveau de son dispositif de commutation (6) une entretoise (10) qui, dans son état monté, impose une distance minimale (11) définie entre le serpentin de chauffage (8) et les nervures (16) de l'échangeur thermique (1).

12. Appareil de chauffage selon l'une des revendications 1 à 11, **caractérisé en ce que** le serpentin de chauffage (8) est fixé sur une plaque de support (12) reliée au dispositif de commutation (6), la plaque de support (12), dans son état monté, étant écartée de l'habillage arrière (5) grâce à des éléments annulaires formant tampons/selles (13).

13. Appareil de chauffage selon la revendication 12, **caractérisé en ce que** des supports (14) sont fixés sur la plaque de support (12) afin de maintenir le serpentin de chauffage (8) à distance de la plaque de support (12) et d'empêcher un desserrage accidentel de le serpentin de chauffage (8).

14. Appareil de chauffage selon la revendication 13, **caractérisé en ce que** les supports (14) sont soudés sur la plaque de support (12) ou assemblés avec celle-ci par complémentarité de formes.

15. Appareil de chauffage selon l'une des revendications 1 à 14, **caractérisé en ce que** le serpentin de chauffage (8) prend la forme d'une double boucle redoublée.

16. Appareil de chauffage selon l'une des revendications 1 à 15, **caractérisé en ce qu'**au moins l'habillage arrière (5) est fait en aluminium.

17. Appareil de chauffage selon l'une des revendications 1 à 16, **caractérisé en ce que** les dimensions du serpentin de chauffage (8) ne dépassent sensiblement pas des contours extérieurs de l'échangeur thermique (1).
